# EUROPÄISCHE PATENTSCHRIFT

(11) **EP 3 216 340 B1**
(45) Veröffentlichungstag und Bekanntmachung des Hinweises auf die Patenterteilung: **22.08.2018**
(21) Anmeldenummer: 16202657.9
(22) Anmeldetag: 07.12.2016
(51) Int. Cl.: A01F 12/44

(54) **MÄHDRESCHER**
COMBINE HARVESTER
MOISSONNEUSE-BATTEUSE

(30) Priorität: 07.03.2016 DE 102016104027
(43) Veröffentlichungstag der Anmeldung: 13.09.2017
(73) Patentinhaber: CLAAS Selbstfahrende Erntemaschinen GmbH, 33428 Harsewinkel (DE)
(72) Erfinder: Waten, Björn, 59320 Westkirchen (DE); Schürmann, Ludger, 48488 Emsbüren (DE); Lehmberg, Andreas, 33428 Harsewinkel (DE); Hay, Jonas, 33428 Harsewinkel (DE); Krieft, Manfred, 33428 Harsewinkel (DE); Buddenkotte, Franz, 33428 Harsewinkel (DE)

(56) Entgegenhaltungen:
- EP-A1- 1 219 164
- WO-A1-2012/097933
- WO-A1-2014/082890
- DE-A1- 19 624 733
- DE-A1-102005 031 053
- US-A- 3 800 804

## Beschreibung

Die vorliegende Erfindung betrifft einen Mähdrescher gemäß dem Oberbegriff des Anspruches 1.

Ein solcher Mähdrescher ist aus der WO 2014/082890 A1 bekannt. Der Mähdrescher umfasst eine Dreschvorrichtung, einen unterhalb der Dreschvorrichtung angeordneten Förderboden, eine der Dreschvorrichtung nachgeordnete Abscheidevorrichtung, einen unterhalb der Abscheidevorrichtung angeordneten Rücklaufboden, welcher in einer Ebene oberhalb des Förderbodens angeordnet ist, so dass sich eine erste Fallstufe zwischen Rücklaufboden und Förderboden ausbildet, entlang derer Erntegut vom Rücklaufboden im freien Fall auf den Förderboden gelangt. Weiterhin umfasst der Mähdrescher eine ein Reinigungsgebläse und wenigstens ein Obersieb und ein Untersieb aufweisende Reinigungseinrichtung, deren Obersiebebene auf einer Ebene unterhalb des Förderbodens liegt, so dass sich eine zweite Fallstufe zwischen dem Förderboden und dem Obersieb ausbildet, entlang derer Erntegut vom Förderboden im freien Fall auf das Obersieb gelangt, sowie eine Steuerungseinrichtung. Zur Verbesserung der Leistung der Reinigung ist gemäß der WO 2014/08 2890 A1 vorgesehen, dass an der Unterseite des Rücklaufbodens ein Luftführungskanal mit einer Luftaustrittsöffnung im Bereich der zweiten Fallstufe angeordnet ist, welche einen über das Obersieb streichenden Luftstrom abgibt. Der Luftführungskanal ist mit dem Reinigungsgebläse der Reinigungseinrichtung verbunden und wird von dieser gespeist. Der von dem Reinigungsgebläse zur Verfügung gestellte Luftstrom muss eine weitere Funktion erfüllen, was zu Lasten seiner Hauptfunktion, der Beaufschlagung von Ober- und Untersieb mit einem ausreichenden Luftstrom geht. Zudem ist dieser zusätzliche Luftstrom der Abscheiderichtung der Körner aus dem Gutstrom entgegengerichtet, so dass dies die Reinigungsleistung negativ beeinflusst, da Korn zusammen mit Nichtkornbestandteilen über das Obersieb hinweg ausgetragen wird, was zu einer Erhöhung der Reinigungsverluste führt. Aufgrund der Anordnung unterhalb des Rücklaufbodens und der Ausrichtung der Luftaustrittsöffnung auf das Obersieb, wirkt der zusätzliche Luftstrom nicht unmittelbar im Bereich der zweiten Fallstufe zwischen dem Förderboden und dem Obersieb, sondern in einem in Gutaustragrichtung zu der zweiten Fallstufe beabstandeten Bereich.

Ein ähnlicher Mähdrescher ist aus der EP 1 219 164 A1 bekannt. Es ist daher die Aufgabe der Erfindung, die Leistung der Reinigungseinrichtung unter gleichzeitiger Beibehaltung oder Verbesserung der Qualität der Reinigungseinrichtung zu erhöhen.
Diese Aufgabe wird erfindungsgemäß durch die Merkmale des Anspruches 1 gelöst.
Vorteilhafte Weiterbildungen der Erfindung sind Gegenstand der Unteransprüche.
Gemäß dem Anspruch 1 wird ein Mähdrescher vorgeschlagen, der eine Dreschvorrichtung, einen unterhalb der Dreschvorrichtung angeordneten Förderboden, eine der Dreschvorrichtung nachgeordnete Abscheidevorrichtung, einen unterhalb der Abscheidevorrichtung angeordneten Rücklaufboden, welcher in einer Ebene oberhalb des Förderbodens angeordnet ist, so dass sich eine erste Fallstufe zwischen dem Rücklaufboden und dem Förderboden ausbildet, entlang derer Erntegut vom Rücklaufboden im freien Fall auf den Förderboden gelangt, eine ein Reinigungsgebläse und wenigstens ein Obersieb und ein Untersieb aufweisende Reinigungseinrichtung, deren Obersiebebene auf einer Ebene unterhalb des Förderbodens liegt, so dass sich eine zweite Fallstufe zwischen dem Förderboden und dem Obersieb ausbildet, entlang derer Erntegut vom Förderboden im freien Fall auf das Obersieb gelangt, sowie eine Steuerungseinrichtung umfasst, der dadurch gekennzeichnet ist, dass zumindest eine endseitig wenigstens eines Luftführungskanals angeordnete Luftaustrittsöffnung vorgesehen ist, aus der ein auf die erste Fallstufe gerichteter Luftstrom austritt. Der auf die erste Fallstufe gerichtete Luftstrom hat insbesondere den Effekt, dass die leichteren Nichtkornbestandteile wie Spreu oder Kurzstroh teilweise aus dem Erntegutstrom entfernt werden, bevor dieser den Förderboden beziehungsweise die Reinigungseinrichtung erreicht. Somit sinkt die Belastung der Reinigungseinrichtung durch Nichtkornbestandteilen, was die Effizienz der Reinigungseinrichtung verbessert. Insbesondere lässt sich die Kornreinheit und der Durchsatz der Reinigungseinrichtung steigern zu, da die Belastung von Obersieb und Untersieb durch Nichtkornbestandteile reduziert wird.

Vorteilhafterweise kann die zumindest eine Luftaustrittsöffnung oberhalb des Förderbodens und in Gutflussrichtung vor dem Rücklaufboden platziert sein. Somit wird bereits beim Übergang des Erntegutes von dem Rücklaufboden auf den Förderboden eine erste Windsichtung durchgeführt, welche den Anteil der Nichtkornbestandteile im Erntegutstrom, der von dem Rücklaufboden abgegeben wird, reduziert.

Insbesondere kann die zumindest eine Luftaustrittsöffnung im Wesentlichen schlitzförmig ausgebildet sein. Durch die annähernd schlitzförmige Luftaustrittsöffnung wird ein schmaler, gerichteter Luftstrom abgegeben, der auf das die erste Fallstufe passierende Erntegut trifft. Hierdurch können vor allem die leichten Nichtkornbestandteile im Erntegutstrom in Gutaustragrichtung der Reinigungseinrichtung abgefördert werden. Durch das Zusammenwirken mit dem von dem Reinigungsgebläse bereitgestellten Luftstrom, welcher das Untersieb und das Obersieb von unten her durchströmt, werden die in der ersten Fallstufe abgeschiedenen Nichtkornbestandteile weitgehend aus dem Mähdrescher ausgetragen, ohne beim Passieren der Siebebene auf das Obersieb zu gelangen. Dabei kann der wenigstens eine Luftführungskanal in Richtung der Luftaustrittsöffnung abschnittsweise verjüngend ausgebildet sein, so dass eine Erhöhung der Strömungsgeschwindigkeit des aus der zumindest einen Luftaustrittsöffnung austretenden Luftstromes erreicht wird.

Vorzugsweise kann genau eine sich im Wesentlichen über die Breite des Förderbodens erstreckende Luftaustrittsöffnung vorgesehen sein. Dies stellt eine konstruktiv einfache und kostengünstige Variante dar.

Eine vorteilhafte Weiterbildung kann vorsehen, dass zwei oder mehr strömungstechnisch voneinander trennbare Luftaustrittsöffnungen vorgesehen sind, die sich jeweils anteilig im Wesentlichen über die Breite des Förderbodens erstrecken. Dies böte die Möglichkeit, bei einer Seitenneigung des Mähdreschers die erste Fallstufe in dem hangseitigen Bereich nicht mit einem Luftstrom zu beaufschlagen, sondern nur den talseitigen Bereich, da die Seitenneigung bereits zu einer Verungleichmäßigung der Erntegutverteilung auf dem Förderboden wie auch dem Rücklaufboden führt.

Weiterhin kann an den wenigstens einen Luftführungskanal zumindest ein Ansauggebläse angeschlossen sein, welches oberhalb der Ebene des Rücklaufbodens angeordnet ist. Das zumindest eine Ansauggebläse kann als Radialgebläse ausgeführt sein.

Dabei kann das zumindest eine Ansauggebläse hydraulisch oder elektrisch antreibbar sein. Ein hydraulischer oder elektrischer Antrieb des zumindest einen Ansauggebläses ermöglicht eine stufenlose Anpassung der Drehzahl, um auf sich ändernde Ernteguteigenschaften, wie beispielsweise die Erntegutart, beziehungsweise Betriebsbedingungen, wie zum Beispiel die Gutverteilung auf dem Förderboden und/oder dem Rücklaufboden aufgrund von Seitenneigung oder Hangneigung, flexibel reagieren zu können.

Vorteilhafterweise kann die Steuerungseinrichtung dazu eingerichtet sein, das zumindest eine Ansauggebläse drehzahlvariabel zu betreiben. Die Ansteuerung des zumindest einen Ansauggebläses kann dabei in Abhängigkeit von Ernteguteigenschaften und messtechnisch erfassbaren Betriebsparametern, unter denen der Mähdrescher betrieben wird, erfolgen. Hierzu kann die Anpassung der Drehzahl des wenigstens einen Ansauggebläses manuell durch eine Eingabe einer Bedienperson mittels einer an die Steuerungseinrichtung angeschlossenen Eingabevorrichtung erfolgen. Alternativ kann die Anpassung automatisiert durch die Steuerungseinrichtung selbst erfolgen. Hierfür können von geeigneten Sensoren, wie beispielsweise Neigungssensoren zur Bestimmung der Neigung, insbesondere der Längs- und/oder Querneigung, des Mähdreschers oder durch Sensoren zur Bestimmung der Erntegutverteilung, beispielsweise Klopfsensoren, quer zur Förderrichtung des Erntegutes und/oder zur Bestimmung von Kornverlusten, Signalwerte für korrespondierende Betriebsparameter erfasst werden, welche an die Steuerungseinrichtung weitergeleitet und von dieser ausgewertet werden. In Abhängigkeit von der Auswertung derartiger Betriebsparameter sowie Erntegutparameter durch die Steuerungseinrichtung kann die Drehzahl des wenigstens einen Ansauggebläses entsprechend kontinuierlich oder intermittierend angepasst werden.

Insbesondere kann der wenigstens eine Luftführungskanal in Abhängigkeit von der Art der Abscheidevorrichtung an einer Außenseite des Mähdreschers oder im Wesentlichen mittig im Mähdrescher geführt sein. Die Abscheidevorrichtung kann als ein so genannter Hordenschüttler ausgebildet sein. Alternativ kann die Abscheidevorrichtung als eine Axialabscheidevorrichtung mit einem oder zwei Axialrotoren ausgeführt sein. Ebenfalls denkbar ist eine Kombination aus Dresch- und Abscheidevorrichtung die als ein nach dem Axialflussprinzip arbeitender Dresch-Trennrotor ausgebildet ist.

Vorzugsweise kann bei einer Ausführung der Abscheidevorrichtung als zwei parallel zueinander angeordnete Axialrotoren der Luftführungskanal zwischen diesen beiden geführt sein. Dies stellt eine platzsparende, bauraumoptimierte Anordnung des Luftführungskanals dar.

Hierbei kann das zumindest eine Ansauggebläse oberhalb der Axialrotoren angeordnet sein. Alternativ kann das zumindest eine Ansauggebläse in einem der Aufnahme von Erntegut dienenden Behältnis angeordnet sein. Die Anordnung kann sich dabei am zur Verfügung stehenden Bauraum orientieren. Vorteilhafterweise können Wandelemente zur pneumatischen Abschottung des zumindest einen Ansauggebläses gegenüber der Dreschvorrichtung und der Abscheidevorrichtung vorgesehen sein. Dies dient der Vermeidung einer Sogwirkung im Bereich von Dreschvorrichtung und Abscheidevorrichtung, welche sich ungünstig auf deren Betrieb auswirken könnte.

Des Weiteren kann das Ansauggebläse einen Ansaugkanal aufweisen, der sich durch ein der Aufnahme von Erntegut dienendes Behältnis des Mähdreschers erstreckt. Der Ansaugkanal, durch den das Ansauggebläse Luft ansaugt kann sich durch das Behältnis hindurch nach oben erstrecken. Die Ansaugöffnung des Ansaugkanals überragt dabei die maximale Füllhöhe des Behältnisses, um ein Einsaugen von Korn zu verhindern. Da das Behältnis zur Aufnahme von Erntegut im Allgemeinen durch begrenzt nach außen schwenkbare Deckel und Seitenwände erweiterbar ist, kann vorgesehen sein, dass der Ansaugkanal mittels eines aufsetzbaren Endstücks verlängerbar ist. Denkbar ist aber auch ein teleskopierbarer Endabschnitt, der beim Öffnen des Behältnisses durch das Ausschwenken von Deckeln und Seitenwänden ausgefahren wird und beim Schließen wieder eingezogen wird.

Die vorliegende Erfindung wird nachstehend anhand von in den Zeichnungen dargestellten Ausführungsbeispielen näher erläutert.

Es zeigen:
- Fig. 1: eine schematische Teilansicht eines Mähdreschers;
- Fig. 2: eine perspektivische Ansicht eines Luftführungskanals mit einem endseitig angeordnetem Ansauggebläse;
- Fig. 3: eine schematische Teilansicht eines Mähdreschers 1 mit einem in einem Behältnis zur Erntegutaufnahme angeordneten Sauggebläse;
- Fig. 4: eine schematische Teilansicht eines Mähdreschers 1 mit einer zwei Axialrotoren umfassenden Abscheidevorrichtung 3 und einem oberhalb dieser angeordneten Ansauggebläse.

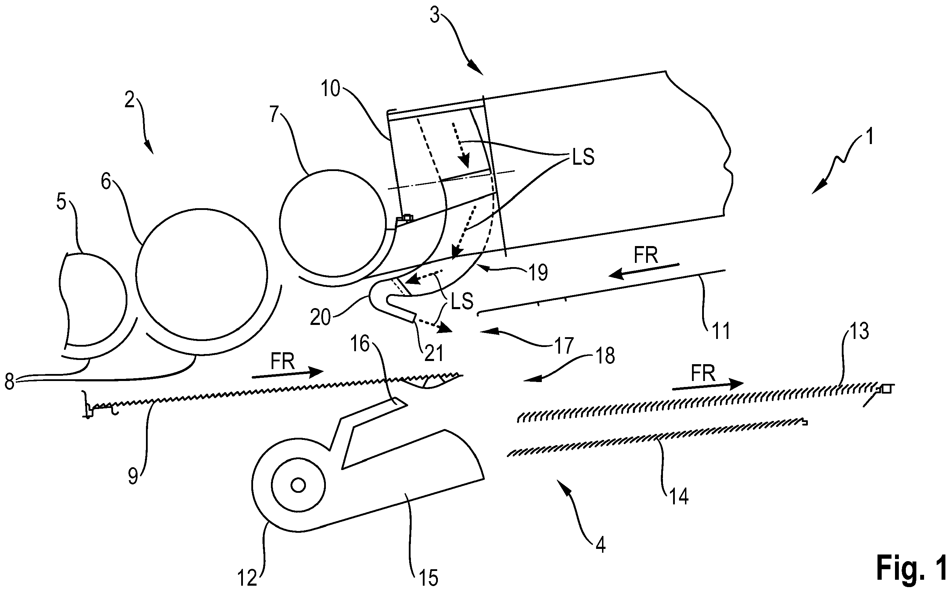

In Fig. 1 ist eine schematische Teilansicht eines bezüglich seines prinzipiellen Aufbaus und seiner grundlegenden Funktionsweise bekannten Mähdreschers 1 dargestellt. In der Zeichnung sind eine Dreschvorrichtung 2, eine Abscheidevorrichtung 3 sowie eine Reinigungseinrichtung 4 des Mähdreschers 1 abgebildet. Die Dreschvorrichtung 2 ist als ein Mehrtrommeldreschwerk ausgeführt, welches eine Vorbeschleunigungstrommel 5, eine Dreschtrommel 6 und eine Wendetrommel 7 umfasst. Unterhalb der Vorbeschleunigungstrommel 5 und der Dreschtrommel 6 sind Dreschkörbe 8 angeordnet, durch welche vor allem ausgedroschenes Korn hindurchtritt und auf einen unterhalb der Dreschvorrichtung angeordneten Förderboden 9 gelangt. Die Wendetrommel 7 ist im Einlaufbereich 10 der als Axialrotor ausgeführten Abscheidevorrichtung 3 angeordnet. Die Wendetrommel 7 führt der Abscheidevorrichtung 3 einen aus Korn und Nichtkornbestandteilen bestehenden Erntegutstrom zu. In der Abscheidevorrichtung 3 werden aus diesem Erntegutstrom Korn und kleine Nichtkornbestandteile, Spreu und Kurzstroh, durch unterhalb des Axialrotors angeordnete Abscheidekörbe abgeschieden, welche auf einen unterhalb der Abscheidevorrichtung 3 angeordneten, in Richtung des Förderbodens 9 abschüssig geneigten Rücklaufboden 11 fallen. Erntegutbestandteile, welche die Abscheidekörbe der Abscheidevorrichtung 3 aufgrund ihrer Größe nicht passieren können, werden in axialer Richtung transportiert. Sowohl der Förderboden 9 als auch der Rücklaufboden 11 sind jeweils oszillierend angetrieben, um das auf ihnen befindliche Erntegut in eine durch den Pfeil FR gekennzeichnete Förderrichtung abzufördern. Die oszillierende Bewegung von Förderboden 9 und Rücklaufboden 11 erfolgt dabei, entsprechend der jeweiligen Förderrichtung FR des darauf befindlichen Erntegutes, gegensinnig.

Unterhalb des Förderbodens 9 und des Rücklaufbodens 11 erstreckt sich die Reinigungseinrichtung 4. Die Reinigungseinrichtung 4 umfasst ein Reinigungsgebläse 12 sowie ein in einem Siebrahmen angeordnetes Obersieb 13 und Untersieb 14. Das Obersieb 13 und das Untersieb 14 sind im Allgemeinen als Lamellensiebe ausgeführt, deren Sieböffnungsweite durch Veränderung der Neigung der Lamellen zur Siebebene variierbar ist. Das Reinigungsgebläse 12 erzeugt einen Reinigungsluftstrom, der anteilig von einem ersten, sich in tangentialer Richtung des Gehäuses des Reinigungsgebläses 12 erstreckenden Luftaustrittskanal 15 in Richtung von Obersieb 13 und Untersieb 14 abgegeben wird, und das Obersieb 13 und das Untersieb 14 im Wesentlichen von unten her durchströmt und umströmt. Ein zweiter Luftaustrittskanal 16 ist auf der dem ersten Luftaustrittkanal 15 gegenüberliegenden Seite des Gehäuses des Reinigungsgebläses 12 angeordnet. Die Austrittsöffnung des zweiten Luftaustrittskanals 16 mündet unterhalb des Förderbodens 9.

Der Rücklaufboden 11 ist in einer Ebene oberhalb des Förderbodens 9 angeordnet, so dass sich zwischen dem Rücklaufboden 11 und dem Förderboden 9 eine erste Fallstufe 17 ausbildet, entlang derer Erntegut vom Rücklaufboden 11 im freien Fall zumindest teilweise auf den Förderboden 9 gelangt. Der von der Dreschvorrichtung 2 auf den Förderboden 9 abgegebene Erntegutstrom gelangt gemeinsam mit dem vom Rücklaufboden 11 kommenden Erntegutstrom entlang einer zweiten Fallstufe 18 im freien Fall auf das Obersieb 13 der Reinigungseinrichtung 4. Der aus dem zweiten Luftaustrittskanal 16 austretende anteilige Reinigungsluftstrom trifft auf das im freien Fall befindliche Erntegut, wobei die leichteren Nichtkornbestandteile, Spreu und Kurzstroh, von diesem Reinigungsluftstrom bereits teilweise in Austragrichtung der Reinigungsvorrichtung 4 oberhalb des Obersiebes 13 abgefördert werden. Dennoch gelangt ein nicht unerheblicher Anteil an Nichtkornbestandteilen auf das Obersieb 13, wodurch die Durchsatzmenge der Reinigungseinrichtung 4 begrenzt wird.

Um den Anteil an Nichtkornbestandteilen im Erntegutstrom, die das Obersieb 13 der Reinigungseinrichtung 4 erreichen, weiter zu verringern, ist wenigstens ein Luftführungskanal 19 vorgesehen, welcher endseitig einen Kanalabschnitt 20 mit zumindest einer Luftaustrittsöffnung 21 aufweist. Der Luftführungskanal 19 ist dabei außermittig am Rahmen des Mähdreschers 1 angeordnet, wie im Fall der nur einen Axialrotor umfassenden Abscheidevorrichtung 3 angedeutet ist. Die zumindest eine Luftaustrittsöffnung 21 mündet in einer Ebene unterhalb des Rücklaufbodens 11 und oberhalb des Förderbodens 9. Gegenüber dem Rücklaufboden 11 ist die Luftaustrittsöffnung 21 in Richtung der Wendetrommel 7 zurückversetzt angeordnet. Aus der zumindest einen Luftaustrittsöffnung 21 tritt ein auf die erste Fallstufe 17 gerichteter Luftstrom LS aus, dessen Strömungsrichtung zur Fallrichtung geneigt ist.

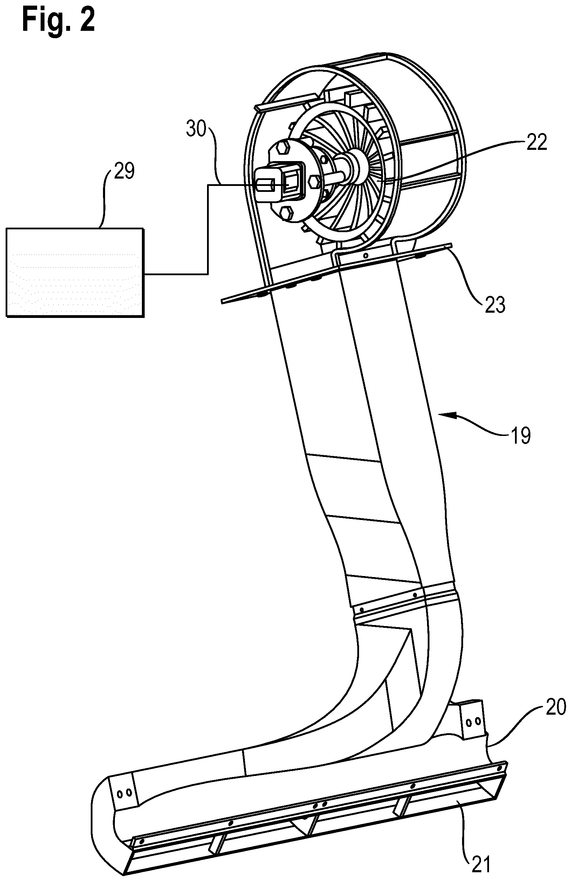

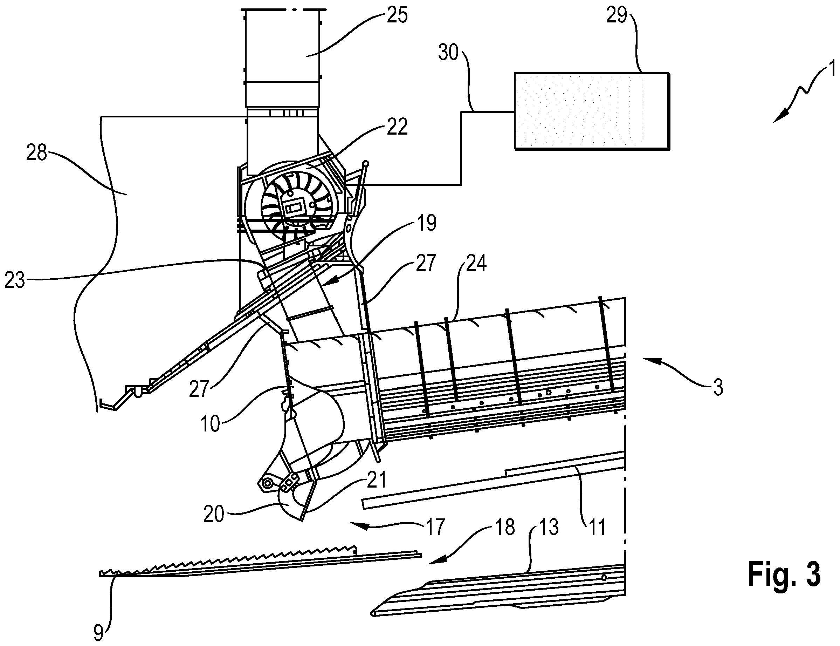

Wie aus der Darstellung in Fig. 1 ersichtlich ist, weist der Luftführungskanal 19 einen sich in Richtung der Luftaustrittsöffnung 21 verjüngenden Querschnittsverlauf auf. Hieraus resultiert eine Zunahme der Strömungsgeschwindigkeit des Luftstromes LS. Die Luftaustrittsöffnung 21 ist, wie in den Fig. 2 und 3 dargestellt, im Wesentlichen schlitzförmig ausgebildet und weist eine etwa quaderförmige Kontur auf. Die Breite der Luftaustrittsöffnung 21 respektive des Kanalabschnitts 20 erstreckt sich im Wesentlichen über die Breite des Förderbodens 9. Somit wird ein schmalbandiger, gerichteter Luftstrom LS mit hoher Strömungsgeschwindigkeit abgegeben, welcher auf den die erste Fallstufe 17 passierenden Erntegutstrom trifft. Durch den schmalbandigen Luftstrom LS werden die leichten Bestandteile des von dem Rücklaufbodens 11 kommenden Erntegutstromes, Spreu und Kurzstroh, zumindest teilweise in Gutaustragrichtung der Reinigungseinrichtung 4 abtransportiert, ohne auf das Obersieb 13 zu gelangen. Der von dem Reinigungsgebläse 12 bereitgestellte Reinigungsluftstrom, welche das Untersieb 14 und das Obersieb 13 von der Unterseite her durchströmt sowie überströmt, bildet über weite Bereich der Siebebene eine durchgängige Strömungsschicht aus, mittels welcher die in der ersten Fallstufe 17 abgeschiedenen Nichtkornbestandteilen in Gutaustragrichtung abtransportiert werden, ohne auf das Obersieb 13 zu gelangen. Die Kontinuität und Aufrechterhaltung der Strömungsschicht in Gutaustragrichtung oberhalb der Siebebenen wird wiederum dadurch begünstigt, dass der Anteil an Nichtkornbestandteilen vor dem Erreichen der Reinigungseinrichtung 4 reduziert wird.

Die Darstellung in Fig. 2 zeigt eine perspektivische Ansicht des Luftführungskanals 19 mit einem endseitig angeordneten Ansauggebläse 22. Das Ansauggebläse 22 ist diametral zu dem Kanalabschnitt 20 an dem Luftführungskanal 19 angeordnet. Der Antrieb des Ansauggebläses 22 erfolgt hydraulisch oder elektrisch. Der hydraulische beziehungsweise elektrische Antrieb ermöglicht eine flexible stufenlose Einstellung der Drehzahl des Ansauggebläses 22. Hierzu umfasst der Mähdrescher 1 eine Steuerungseinrichtung 29, welche mittels einer Steuer- und Signalleitung 30 mit dem Antrieb des Ansauggebläses 22 verbunden ist. Die Anordnung des Ansauggebläses 22 erfolgt an einer Anschlussstelle 23 mittels einer Flanschverbindung. Der Luftführungskanal 19 weist einen im Wesentlichen quaderförmigen Querschnitt auf, der in Richtung der Luftaustrittsöffnung 21 in einen annähernd trichterförmigen Querschnittsverlauf übergeht. Dabei erfährt der Querschnittsverlauf des Luftführungskanals 19 zunächst eine parallel zu dem Kanalabschnitt 20 orientierte Einschnürung. Im Übergangsbereich zu dem Kanalabschnitt 20 erfährt der Luftführungskanal 19 eine senkrecht zu dem Kanalabschnitt 20 orientierte Einschnürung wobei gleichzeitig eine Aufweitung parallel zu dem Kanalabschnitt 20 erfolgt. Wie aus der Darstellung in Fig. 2 ersichtlich, mündet der Luftführungskanal 19 etwa mittig in den Kanalabschnitt 20 ein.

In Fig. 3 ist eine schematische Teilansicht eines Mähdreschers 1 mit einem in einem Behältnis 28 zur Erntegutaufnahme angeordneten Ansauggebläse 22 dargestellt. Die Anordnung des Luftführungskanals 19 erfolgt zwischen den beiden Axialrotoren der Abscheidevorrichtung 3. Diese Anordnung des Luftführungskanals 19 nutzt den in dem Mähdrescher 1 nur begrenzt vorhanden Bauraum optimal aus. Dabei kommt die abschnittsweise Einschnürung des Luftführungskanals 19 der platzsparenden Anordnung zugute. Oberhalb der die Axialrotoren ummantelnden Gehäuseabschnitte 24 der Abscheidevorrichtung 3 mündet der Luftführungskanal 19 in die Anschlussstelle 23, an welche das Ansauggebläse 22 anschließbar ist. Das Ansaugen von Luft durch das Ansauggebläse 22 erfolgt durch einen Ansaugkanal 25. In dem dargestellten Ausführungsbeispiel sind das Ansauggebläse 22 und der Ansaugkanal 25 in einem der Aufnahme von Erntegut dienenden Behältnis 28 des Mähdreschers 1 angeordnet. Hierbei erstreckt sich der Ansaugkanal 25 im Wesentlichen senkrecht nach oben. Wandelemente 27 dienen der pneumatischen Abschottung des Ansauggebläses 22 gegenüber der Dreschvorrichtung 2 und der Abscheidevorrichtung 3. Da das Behältnis 28 während der Straßenfahrt des Mähdreschers 1 zwecks Einhaltung der bei Straßenfahrt zulässigen Gesamthöhe mittels Deckel- und Wandelementen verschlossen ist, ist vorzugsweise vorgesehen, dass der Ansaugkanal 25 an seinem freien Ende einen teleskopierbaren Abschnitt aufweist, der beim Öffnen der Deckel- und Wandelemente ausgezogen wird. Somit kann gewährleistet werden, dass die Ansaugöffnung am freien Ende des Ansaugkanals 25 sich oberhalb des Schüttkegels des von dem Behältnis 28 aufgenommenen Korns befindet. Beim Schließen der Deckel- und Wandelemente wird der teleskopierbare Abschnitt des Ansaugkanals 25 entsprechend eingezogen, so dass die Deckelelemente das Behältnis 28 bündig verschließen können. Alternativ kann der Ansaugkanal 25 mittels eines aufsetzbaren Endstücks verlängerbar sein.

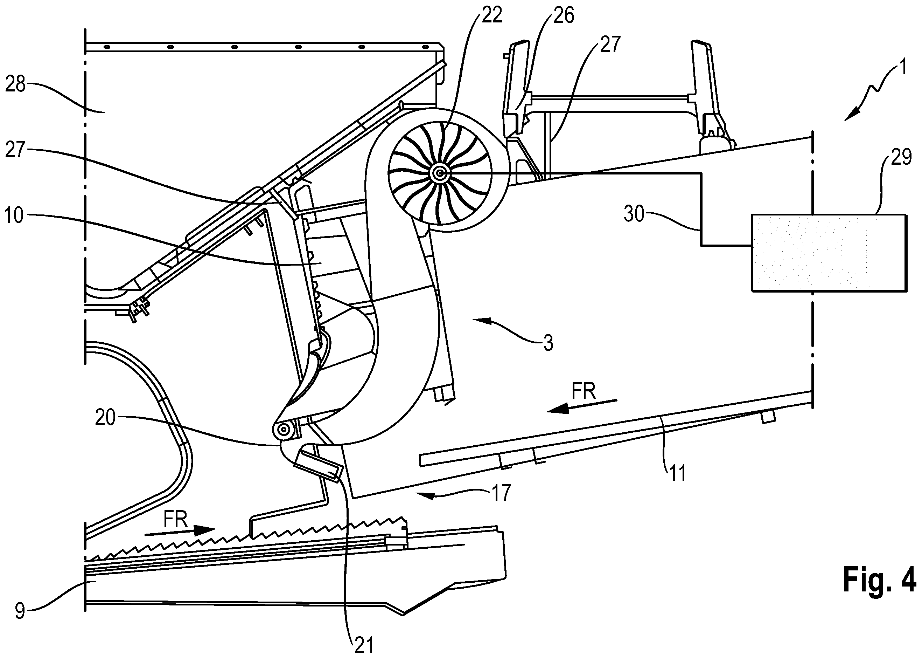

Die Darstellung in Fig. 4 zeigt eine schematische Teilansicht eines Mähdreschers 1 mit einer zwei Axialrotoren umfassenden Abscheidevorrichtung 3 und einem oberhalb dieser angeordneten Ansauggebläse 22. Die Darstellung zeigt lediglich den Einlaufbereich 10 des hinteren Axialrotors. Zwischen den beiden Axialrotoren ist der Luftführungskanal 19 angeordnet. Oberhalb der Gehäuseabschnitte 24 der Abscheidevorrichtung 3 ist zwischen diesen das Ansauggebläse 22 angeordnet. Um das Ansaugen von Spreu oder Kurzstroh durch das Ansauggebläse 22 zu minimieren, sind Wandelemente 27 zur pneumatischen Abschottung gegenüber der Dreschvorrichtung 2 und der Abscheidevorrichtung 3 vorgesehen.

Die Steuerungseinrichtung 29 ermöglicht die Einstellung der Antriebsdrehzahl des wenigstens einen Ansauggebläses 22 in Abhängigkeit von der Erntegutart und sonstigen Ernteguteigenschaften sowie den vorherrschenden Betriebsbedingungen, unter denen der Mähdrescher 1 betrieben wird. Die Steuerungseinrichtung 29 steht mit nicht dargestellten Sensoren in Verbindung, welche die Quer- und Längsneigung des Mähdreschers 1 erfassen. Weiterhin steht die Steuerungseinrichtung 29 mit nicht dargestellten Sensoren in Verbindung, welche der Bestimmung der Erntegutverteilung quer zur Förderrichtung FR dienen. Diese können insbesondere zur Erfassung der Erntegutverteilung auf dem Förderboden 9 und dem Rücklaufboden 11 dienen. In Abhängigkeit von diesen Parametern wird die Drehzahl des wenigstens einen Ansauggebläses 22 durch die Steuerungseinrichtung 29 angepasst.

### Bezugszeichenliste

| | | | |
|---|---|---|---|
| 1 | Mähdrescher | LS | Luftstrom |
| 2 | Dreschvorrichtung | FR | Förderrichtung |
| 3 | Abscheidevorrichtung | | |
| 4 | Reinigungseinrichtung | | |
| 5 | Vorbeschleunigungstrommel | | |
| 6 | Dreschtrommel | | |
| 7 | Wendetrommel | | |
| 8 | Dreschkorb | | |
| 9 | Förderboden | | |
| 10 | Einlaufbereich | | |
| 11 | Rücklaufboden | | |
| 12 | Reinigungsgebläse | | |
| 13 | Obersieb | | |
| 14 | Untersieb | | |
| 15 | Erster Luftaustrittskanal | | |
| 16 | Zweiter Luftaustrittskanal | | |
| 17 | Erste Fallstufe | | |
| 18 | Zweite Fallstufe | | |
| 19 | Luftführungskanal | | |
| 20 | Kanalabschnitt | | |
| 21 | Luftaustrittsöffnung | | |
| 22 | Ansauggebläse | | |
| 23 | Anschlussstelle | | |
| 24 | Gehäuseabschnitt | | |
| 25 | Ansaugkanal | | |
| 26 | Ansaugstutzen | | |
| 27 | Wandelement | | |
| 28 | Behältnis | | |
| 29 | Steuerungseinrichtung | | |
| 30 | Steuer- und Signalleitung | | |

## Patentansprüche

1. Mähdrescher (1), umfassend eine Dreschvorrichtung (2), einen unterhalb der Dreschvorrichtung (2) angeordneten Förderboden (9), eine der Dreschvorrichtung (2) nachgeordnete Abscheidevorrichtung (3), einen unterhalb der Abscheidevorrichtung (3) angeordneten Rücklaufboden (11), welcher in einer Ebene oberhalb des Förderbodens (9) angeordnet ist, so dass sich eine erste Fallstufe (17) ausbildet, entlang derer Erntegut vom Rücklaufboden (11) im freien Fall zumindest teilweise auf den Förderboden (9) gelangt, eine ein Reinigungsgebläse (12) und wenigstens ein Obersieb (13) und ein Untersieb (3) aufweisende Reinigungseinrichtung (4), deren Siebebene auf einer Ebene unterhalb des Förderbodens (9) liegt, so dass sich eine zweite Fallstufe (18) ausbildet, entlang derer Erntegut vom Förderboden (9) im freien Fall auf das Obersieb (13) gelangt, sowie eine Steuerungseinrichtung (29), **dadurch gekennzeichnet, dass** zumindest eine endseitig wenigstens eines Luftführungskanals (19) angeordnete Luftaustrittsöffnung (21) vorgesehen ist, aus der ein auf die erste Fallstufe (17) gerichteter Luftstrom (LS) austritt.

2. Mähdrescher (1) nach Anspruch 1, **dadurch gekennzeichnet, dass** die zumindest eine Luftaustrittsöffnung (21) oberhalb des Förderbodens (9) und in Gutflussrichtung vor dem Rücklaufboden (11) platziert ist.

3. Mähdrescher (1) nach einem der Ansprüche 1 oder 2, **dadurch gekennzeichnet, dass** die zumindest eine Luftaustrittsöffnung (21) im Wesentlichen schlitzförmig ausgebildet ist.

4. Mähdrescher (1) nach einem der Ansprüche 1 bis 3, **dadurch gekennzeichnet, dass** der wenigstens eine Luftführungskanal (19) einen sich in Richtung der zumindest einen Luftaustrittsöffnung (21) verjüngenden Querschnitt aufweist.

5. Mähdrescher (1) nach einem der Ansprüche 1 bis 4, **dadurch gekennzeichnet, dass** genau eine sich im Wesentlichen über die Breite des Förderbodens (9) erstreckende Luftaustrittsöffnung (21) vorgesehen ist.

6. Mähdrescher (1) nach einem der Ansprüche 1 bis 5, **dadurch gekennzeichnet, dass** an den wenigstens einen Luftführungskanal (19) zumindest ein Ansauggebläse (22) angeschlossen ist, welches oberhalb der Ebene des Rücklaufbodens (11) angeordnet ist.

7. Mähdrescher (1) nach Anspruch 6, **dadurch gekennzeichnet, dass** das zumindest eine Ansauggebläse (22) hydraulisch oder elektrisch antreibbar ist.

8. Mähdrescher (1) nach einem der Ansprüche 1 bis 7, **dadurch gekennzeichnet, dass** die Steuerungseinrichtung (29) dazu eingerichtet ist, das zumindest eine Ansauggebläse (22) drehzahlvariabel zu betreiben.

9. Mähdrescher (1) nach einem der Ansprüche 1 bis 8, **dadurch gekennzeichnet, dass** der wenigstens eine Luftführungskanal (19) in Abhängigkeit von der Art der Abscheidevorrichtung (3) an einer Außenseite des Mähdreschers (1) oder im Wesentlichen mittig im Mähdrescher (1) geführt ist.

10. Mähdrescher (1) nach Anspruch 9, **dadurch gekennzeichnet, dass** bei einer Ausführung der Abscheidevorrichtung (3) als zwei parallel zueinander angeordnete Axialrotoren der Luftführungskanal (19) zwischen diesen beiden geführt ist.

11. Mähdrescher (1) nach Anspruch 9, **dadurch gekennzeichnet, dass** das Ansauggebläse (22) oberhalb der Axialrotoren angeordnet ist.

12. Mähdrescher (1) nach einem der Ansprüche 1 bis 11, **dadurch gekennzeichnet, dass** Wandelemente (27) zur pneumatischen Abschottung des zumindest einen Ansauggebläses (22) gegenüber der Dreschvorrichtung (2) und der Abscheidevorrichtung (3) vorgesehen sind.

13. Mähdrescher (1) nach einem der Ansprüche 4 bis 12, **dadurch gekennzeichnet, dass** das Ansauggebläse (22) einen Ansaugkanal (25) aufweist, der sich durch ein der Aufnahme von Erntegut dienendes Behältnis (28) des Mähdreschers (1) erstreckt.

## Claims

1. A combine harvester (1) including a threshing apparatus (2), a conveyor floor (9) arranged beneath the threshing apparatus (2), a separating apparatus (3) arranged downstream of the threshing apparatus (2), a return floor (11) which is arranged beneath the separating apparatus (3) and which is arranged in a plane above the conveyor floor (9) so that a first drop stage (7) is formed, along which crop material passes from the return floor (11) in free fall at least partly on to the conveyor floor (9), a cleaning apparatus (4) which has a cleaning fan (12) and at least one upper sieve (13) and lower sieve (3) and the sieve plane of which is disposed on a plane beneath the conveyor floor (9) so that a second drop stage (18) is formed, along which crop material passes from the conveyor floor (9) in free fall on to the upper sieve (13), and a control device (29), **characterised in that** there is provided at least one air outlet opening (21) arranged at the end of at least one air guide passage (19) and from which an air flow (LS) directed on to the first drop stage (17) issues.

2. A combine harvester (1) according to claim 1 **characterised in that** the at least one air outlet opening (21) is placed above the conveyor floor (9) and before the return floor (11) in the material flow direction.

3. A combine harvester (1) according to one of claims 1 and 2 **characterised in that** at least one air outlet opening (21) is of a substantially slit-shaped configuration.

4. A combine harvester (1) according to one of claims 1 to 3 **characterised in that** the at least one air guide passage (19) is of a cross-section which narrows in the direction of the at least one air outlet opening (21).

5. A combine harvester (1) according to one of claims 1 to 4 **characterised in that** there is provided precisely one air outlet opening (21) extending substantially over the width of the conveyor floor (9).

6. A combine harvester (1) according to one of claims 1 to 5 **characterised in that** connected to the at least one air guide passage (19) is at least one aspiration fan (22) arranged above the plane of the return floor (11).

7. A combine harvester (1) according to claim 6 **characterised in that** the at least one aspiration fan (22) is drivable hydraulically or electrically.

8. A combine harvester (1) according to one of claims 1 to 7 **characterised in that** the control device (29) is adapted to operate the at least one aspiration fan (22) in variable speed fashion.

9. A combine harvester (1) according to one of claims 1 to 8 **characterised in that** the at least one air guide passage (19) is guided at an outside of the combine harvester (1) or substantially centrally in the combine harvester (1) in dependence on the type of separating apparatus (3).

10. A combine harvester (1) according to claim 9 **characterised in that** when the separating apparatus (3) is in the form of two axial rotors arranged in mutually parallel relationship the air guide passage (19) is passed between those two.

11. A combine harvester (1) according to claim 9 **characterised in that** the aspiration fan (22) is arranged above the axial rotors.

12. A combine harvester (1) according to one of claims 1 to 11 **characterised in that** there are provided wall elements (27) for pneumatically partitioning the at least one aspiration fan (22) in relation to the threshing apparatus (2) and the separating apparatus (3).

13. A combine harvester (1) according to one of claims 4 to 12 **characterised in that** the aspiration fan (22) has a aspiration passage (25) which extends through a container (28) of the combine harvester (1), that serves to receive crop material.

## Revendications

1. Moissonneuse-batteuse (1) comprenant un dispositif de battage (2), une table de préparation (9) disposée sous le dispositif de battage (2), un dispositif séparateur (3) disposé en aval du dispositif de battage (2), une table de retour (11) disposée sous le dispositif séparateur (3) et disposée dans un plan situé au-dessus de la table de préparation (9), de sorte qu'il se forme une première chute (17) le long de laquelle du produit récolté tombe en chute libre de la table de retour (11) au moins en partie sur la table de préparation (9), un équipement de nettoyage (4) qui comporte un ventilateur de nettoyage (12) et au moins un tamis supérieur (13) et un tamis inférieur (3) et dont le plan de tamisage se trouve sur un plan situé au-dessous de la table de préparation (9), de sorte qu'il se forme une seconde chute (18) le long de laquelle du produit récolté tombe en chute libre de la table de préparation (9) sur le tamis supérieur (13), ainsi qu'un équipement de commande (29), **caractérisée en ce qu'**il est prévu au moins une ouverture de sortie d'air (21) qui est disposée à une extrémité d'au moins un canal de conduite d'air (19) et d'où sort un courant d'air (LS) dirigé vers la première chute (17).

2. Moissonneuse-batteuse (1) selon la revendication 1, **caractérisée en ce que** la au moins une ouverture de sortie d'air (21) se trouve au-dessus de la table de préparation (9) et, par rapport au sens d'écoulement du produit, avant la table de retour (11).

3. Moissonneuse-batteuse (1) selon une des revendications 1 ou 2, **caractérisée en ce que** la au moins une ouverture de sortie d'air (21) est conformée sensiblement en fente.

4. Moissonneuse-batteuse (1) selon une des revendications 1 à 3, **caractérisée en ce que** le au moins un canal de conduite d'air (19) présente une section transversale qui se rétrécit en direction de la au moins une ouverture de sortie d'air (21).

5. Moissonneuse-batteuse (1) selon une des revendications 1 à 4, **caractérisée en ce qu'**il est prévu exactement une ouverture de sortie d'air (21) s'étendant sensiblement sur la largeur de la table de préparation (9).

6. Moissonneuse-batteuse (1) selon une des revendications 1 à 5, **caractérisée en ce que** au au moins un canal de conduite d'air (19) est raccordé au moins un ventilateur aspirant (22) qui est disposé au-dessus du plan de la table de retour (11).

7. Moissonneuse-batteuse (1) selon la revendication 6, **caractérisée en ce que** le au moins un ventilateur aspirant (22) est actionné hydrauliquement ou électriquement.

8. Moissonneuse-batteuse (1) selon une des revendications 1 à 7, **caractérisée en ce que** l'équipement de commande (29) est agencé pour actionner le au moins un ventilateur aspirant (22) avec une vitesse de rotation variable.

9. Moissonneuse-batteuse (1) selon une des revendications 1 à 8, **caractérisée en ce que**, en fonction du type du dispositif séparateur (3), le au moins un canal de conduite d'air (19) passe sur le côté extérieur de la moissonneuse-batteuse (1) ou sensiblement au centre de la moissonneuse-batteuse (1).

10. Moissonneuse-batteuse (1) selon la revendication 9, **caractérisée en ce que**, en cas de conception du dispositif séparateur (3) sous la forme de deux rotors axiaux disposés parallèlement l'un à l'autre, le canal de conduite d'air (19) passe entre ceux-ci.

11. Moissonneuse-batteuse (1) selon la revendication 9, **caractérisée en ce que** le ventilateur aspirant (22) est disposé au-dessus des rotors axiaux.

12. Moissonneuse-batteuse (1) selon une des revendications 1 à 11, **caractérisée en ce que** des éléments de cloison (27) sont prévus pour isoler pneumatiquement le au moins un ventilateur aspirant (22) par rapport au dispositif de battage (2) et au dispositif séparateur (3).

13. Moissonneuse-batteuse (1) selon une des revendications 4 à 12, **caractérisée en ce que** le ventilateur aspirant (22) comporte un canal d'aspiration (25) qui s'étend à travers un contenant (28) de la moissonneuse-batteuse (1) servant à recevoir du produit récolté.
